Europäisches Patentamt

(19) European Patent Office    (11) Numéro de publication: **0 080 544**
**B1**
Office européen des brevets

(12)                    **FASCICULE DE BREVET EUROPEEN**

(45) Date de publication du fascicule du brevet:    (51) Int. Cl.⁴: **H 04 L 27/00**
19.03.86

(21) Numéro de dépôt: **81430041.4**

(22) Date de dépôt: **30.11.81**

(54) Procédé de réception d'un signal de données en modulation à double bande latérale-porteuses en quadrature.

(43) Date de publication de la demande:        (73) Titulaire: **International Business Machines Corporation,**
08.06.83 Bulletin 83/23                          **Old Orchard Road, Armonk, N.Y. 10504 (US)**
                                            (84) Etats contractants désignés: **DE GB**

(45) Mention de la délivrance du brevet:
19.03.86 Bulletin 86/12                     (73) Titulaire: **Compagnie IBM FRANCE, 5 Place Vendôme,**
                                                **F-75000 Paris 1er (FR)**
                                            (84) Etats contractants désignés: **FR**
(84) Etats contractants désignés:
**DE FR GB**
                                            (72) Inventeur: **Godard, Dominique, Chemin du Moulin, Opio**
                                                **F-06650 Le Rouret (FR)**
(56) Documents cités:
**EP - A - 0 030 037**
**US - A - 3 670 269**
**US - A - 4 247 940**                       (74) Mandataire: **de Pena, Alain, Compagnie IBM France**
                                                **Département de Propriété Industrielle, F-06610 La**
                                                **Gaude (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

LIBER, STOCKHOLM 1986

## Description

### Domaine Technique

La présente invention concerne les systèmes de transmission de données, et plus particulièrement un procédé de réception d'un signal de données en modulation à double bande latérale-porteuses en quadrature (DSB-QC) particulièrement bien adapté aux systèmes dans lesquels le canal de transmission utilisé a une caractéristique amplitude/ fréquence dissymetrique. Le terme modulation DSB-QC est utilisé ici au sens large de façon à inclure tous les procédés de modulation dans lesquels le signal transmis peut être représenté par la superposition de deux porteuses en quadrature modulées en amplitude.

### Etat de la Technique

Dans les systèmes de transmission de données utilisant une modulation DSB-QC, la séquence de bits à transmettre est tout d'abord divisée en groupes de q bits et on fait correspondre à chacun de ces groupes un de $2^q$ nombres complexes, ou symboles complexes. Ces symboles sont ensuite transmis un par un à des instants régulièrement espacés de T secondes, appelés instants de signalisation. Chaque symbole est transmis en faisant correspondre respectivement à ses parties réelle et imaginaire une valeur d'amplitude de deux porteuses ayant la même fréquence et des phases en quadrature. Ces deux porteuses sont ensuite combinées et appliquées à l'entrée du canal de transmission.

Dans les récepteurs DSB-QC conventionnels, le signal reçu du canal de transmission est filtré par un filtre passe-bande qui rejette le bruit hors bande et son energie est normalisée par un circuit de contrôle automatique de gain. Le signal ainsi obtenu est converti en numérique et les données détectées sont obtenues par traitement du signal numerique obtenu. Ce traitement comprend généralement la decomposition du signal numérique en ses composantes en phase et en quadrature, sa démodulation par une porteuse locale, l'égalisation du signal démodulé et la détection des données à partir du signal égalisé. Une horloge synchronisée sur le signal reçu commande les différents éléments du récepteur. On trouvera un example de structure d'un tel récepteur dans, par exemple, la demande de brevet européen EP-A-006121.

Dans les systèmes de transmission de données utilisant une modulation DSB-QC, le spectre de fréquence du signal de données appliqué à l'entrée du canal de transmission, que l'on désignera par la suite par signal transmis, est centré sur la fréquence $f_c$ de la porteuse et a une longueur à 3 décibels (dB) d'atténuation égale à la cadence de signalisation l/T. Les fréquences $f_1$ et $f_2$ qui délimitent cette largeur et que l'on désigne souvent par le terme de fréquences de Nyquist sont données par les relations suivantes:

$$f_1 = f_c - \frac{1}{2T} \qquad\qquad f_2 = f_c + \frac{1}{2T}$$

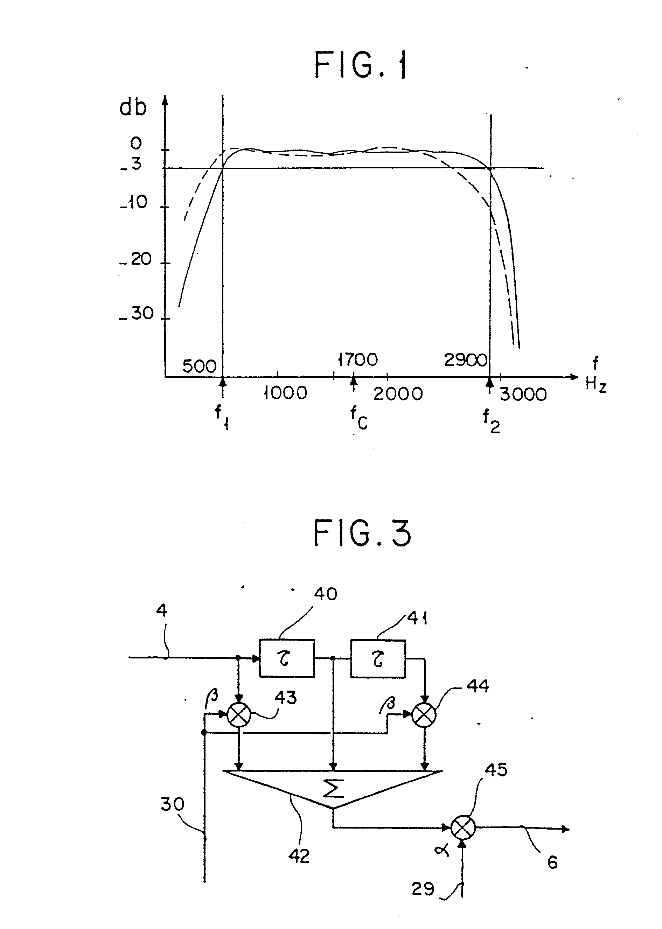

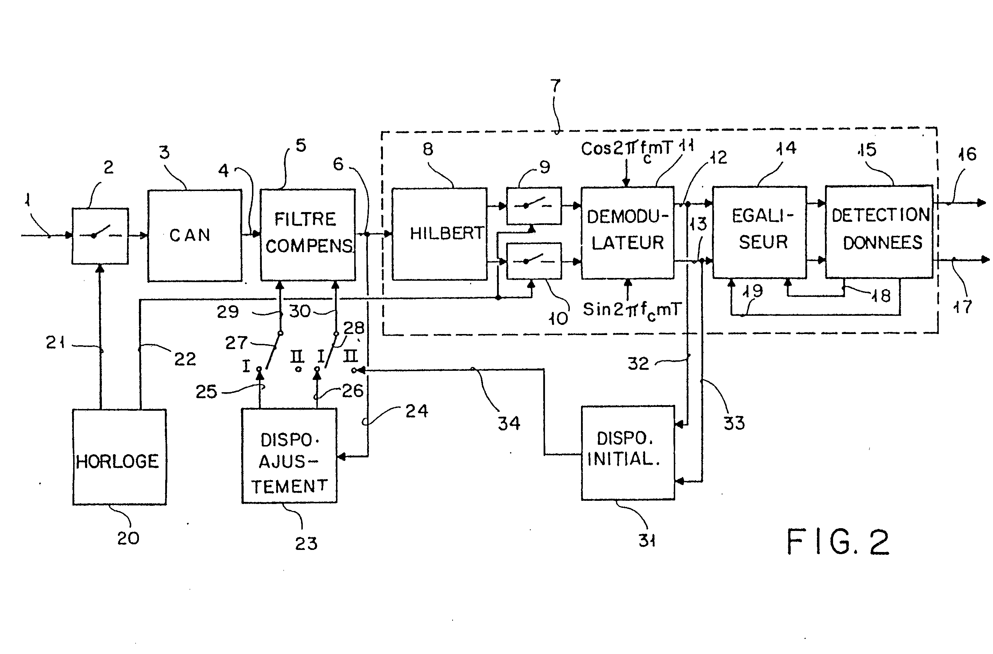

A titre d'exemple, on a représenté en trait plein sur la figure 1 la forme typique du spectre du signal transmis dans un système à 9600 bits par seconde (bps) et conforme à l'Avis V29 du CCITT. Dans cet exemple, les valeurs de $f_c$, l/T, $f_1$ et $f_2$ sont les suivantes:

$f_c$ = 1700 Hz 1/T = 2400 Hz
$f_1$ = 500 Hz $f_2$ = 2900 Hz.

Si le canal de transmission utilisé était parfait, le spectre du signal à la sortie du canal de transmission, oô signal reçu, serait identique à celui du signal transmis. En réalité, il n'en est rien, et la plupart des canaux de transmission utilisés, et notamment les canaux qui utilisent les lignes téléphoniques du reseau public commuté, ont une caractéristique amplitude/fréquence non symétrique par rapport à leur frequence centrale, qui fait que le spectre du signal reçu présente une dissymétrie sur ses bords. On a représenté en traits pointillés sur la figure 1 la forme typique du spectre du signal reçu qui correspond au spectre du signal transmis illustré en trait plein. Cette dissymétrie du spectre du signal reçu a des effets néfastes sur le bon fonctionnement du récepteur et notamment sur là synchronisation de son horloge qui est en général synchronisée sur le signal reçu au moyen d'une information de chronologie dérivée des composantes à $f_1$ et $f_2$ du signal reçu, comme décrit dans le brevet français FR-A-2 309 089.

### Exposé de l'Invention

Un objet de l'invention est de fournir un procédé de réception d'un signal de données en modulation DSB-QC dans lesquels les effets de la dissymétrie de la caractéristique amplitude/fréquence du canal de transmission

sont compensés.

D'une manière genérale, l'invention propose un procédé et un dispositif de réception dans lesquels le signal reçu est échantillonné à une cadence $1/\tau$ qui est un multiple de la cadence de signalisation $1/T$ et filtré de façon telle que les composantes aux fréquences $f_1$ et $f_2$ du signal filtré aient des amplitudes substantiellement égales, et que la phase des composantes de fréquence du signal reçu ne soit pas altérée, et dans lesquels les données détectées sont obtenues par traitement du signal reçu ainsi filtré, ce traitement incluant une opération d'egalisation.

Selon un mode de realisation de l'invention, le filtre a pour fonction de transfert:

$G(f) = \alpha (1 + 2\beta \cos 2\pi f\tau)$

où $\alpha$ est un coefficient représentant
le gain du filtre, et
$\beta$ est un coefficient dont la valeur est substantiellement égale à

$$\beta = \frac{R-1}{2(\cos 2\pi f_1 \tau - R \cos 2\pi f_2 \tau)}$$

où $R = A_2/A_1$, et
$A_1$ et $A_2$ représentent respectivement les amplitudes des composantes à $f_1$ et $f_2$ du signal reçu.
Selon un mode de réalisation de l'invention le gain $\alpha$ a une valeur substantiellement égale à

$$\alpha = \frac{K}{R} \frac{\cos 2\pi f_1 \tau - R \cos 2\pi f_2 \tau}{\cos 2\pi f_1 \tau - \cos 2\pi f_2 \tau}$$

où K est une constante représentant l'amplitude désirée des composantes à $f_1$ et $f_2$ du signal filtré.

Selon un autre mode de réalisation de l'invention la valeur de $\beta$ est dérivée du signal de synchronisation qui précède le signal de données.

Selon un autre mode de réalisation, le coefficient $\beta$ et/ou le gain $\alpha$ sont ajustés continuellement pendant la réception du signal de données.

D'autres objets, caractéristiques et avantages de la présente invention ressortiront mieux de l'exposé qui suit, fait en reférence aux dessins annexés à ce texte, qui représentent des modes de réalisation préférés de l'invention.

## Brève Description des Figures

La figure 1 représente les spectres typiques d'un signal de données DSB-QC transmis à travers un canal de transmission et du signal reçu correspondant.

La figure 2 représente un schéma simplifié d'un récepteur DSB-QC conforme à l'invention.

La figure 3 représente un mode de réalisation du filtre de compensation 5 de la figure 2.

La figure 4 représente un mode de réalisation du dispositif d'initialisation 31 de la figure 2.

La figure 5 représente un mode de réalisation du dispositif d'ajustement 23 de la figure 2.

## Description Detaillée de l'Invention

On a représenté sur la figure 2 le bloc diagramme d'un récepteur DSB-QC à 8600 bps répondant aux recommandations de l'Avis V29 du CCITT (Comité Consultatif International pour le Télégraphe et le Téléphone) et conforme à l'invention. Le signal reçu du canal de transmission, dont l'énergie a été normalisée par un circuit de contrôle automatique de gain (non represénté) et qui a été filtré par un filtre passe bande (non représenté) qui rejette le bruit hors bande, est appliqué par une ligne 1 à un dispositif d'échantillonnage 2 dans lequel il est échantillonné à la cadence $1/\tau$. La cadence $1/\tau$ est choisie égale à un multiple $M/T$ de la cadence de signalisation $1/T$ de façon à ce que l'on dispose à la sortie du dispositif 2 d'un nombre d'échantillons suffisant pour bien définir le signal reçu. La valeur de l'amplitude de ces échantillons est convertie en numérique dans un convertisseur analogique-numérique 3 et appliquée par une ligne 4 à un filtre de compensation 5 qui sera décrit en détail en référence à la figure 3. La sortie du filtre de compensation 5 est appliquée par une ligne 6 à un système de traitement 7 qui dérive du signal filtré disponible à la sortie du filtre 5 les composantes en phase et en quadrature des symboles de données détectés. Dans le système de traitement 7, la ligne 6 est appliquée à l'entrée d'un transformateur de Hilbert numérique 8.

Un transformateur de Hilbert est un dispositif connu qui a une entrée et deux sorties et qui fournit respectivement à ses deux sorties les composantes en phase et en quadrature du signal appliqué à son entrée. On en trouvera un exemple de réalisation numérique dans l'article "Theory and Implementation of the Discrete Hilvert Transform", paru dans "Digital Signal Processing", L.R. Rabiner et C.M. Rader, 1872, IEEE Press.

Les composantes en phase et en quadrature fournies par le trasnformateur de Hilbert 8 sont respectivement ré-échantillonnées à la cadence de signalisation I/T par deux dispositifs d'échantillonnage 8 et 10. Les sorties des dispositifs d'échantillonnage 9 et 10 sont appliquées à un démodulateur complexe 11 qui reçoit d'une source locale non représentée une porteuse en phase de la forme cos $2\pi f_c mT$ et une porteuse en quadrature de la forme sin $2\pi f_c mT$; $f_c$ étant la fréquence de la porteuse et m un entier positif qui varie de zéro à l'infini. Si on désigne par r(mT) le signal appliqué à l'entrée du démodulateur 11 à l'instant de signalisation mT et par Re r(mT) et Im r(mT) ses composantes en phase et en quadrature, respectivement, on obtient à la sortie du démodulateur 11 les composantes en phase et en quadrature, respectivement Re y(mT) et Im y(mT), du signal démodulé y(mT), conformément aux relations connues:

$$\text{Re } y(mT) = [\text{Re } r(mt)] \cos 2\pi f_c mT + [\text{Im } r(mt))] \sin 2\pi f\ mT \quad (1)$$

$$\text{Im } y(mT) = - [\text{Re } r(mt)] \sin 2\pi f_c mT + [\text{Im } r(mt))] \cos 2\pi f_c mT \quad (2)$$

Les composantes en phase et en quadrature du signal démodulé sont appliquées respectivement par des lignes 12 et 13 à un égaliseur complexe adaptatif 14 dont on trouvera un exemple de réalisation dans le brevet français FR-A-2 237 379. Les composantes en phase et en quadrature du signal égalisé sont appliquées à un système de détection de données 15 qui fournit respectivement sur des lignes 16 et 17 les composantes en phase et en quadrature des symboles de données détectés, et sur les lignes 18 et 19 les composantes en phase et en quadrature d'un signal d'erreur représentatif de l'écart entre les composantes du signal égalisé et celles du symbole de données détecté correspondant. On trouvera un exemple de realisation d'un système de détection de données dans le brevet français FR-A-2 296 322. Les lignes 18 et 19 sont reliées à l'égaliseur 14.

Une horloge 20 synchronisée sur le signal reçu par le récepteur, et qui peut être de tout type connu comme, par exemple, du type décrit dans le brevet français FR-A-2 309 089, commande de façon connue le dispositif d'échantillonnage 2 par une ligne 21, les dispositifs d'échantillonnage 9 et 10 par une ligne 22, et les autres éléments du récepteur par des lignes non représentées.

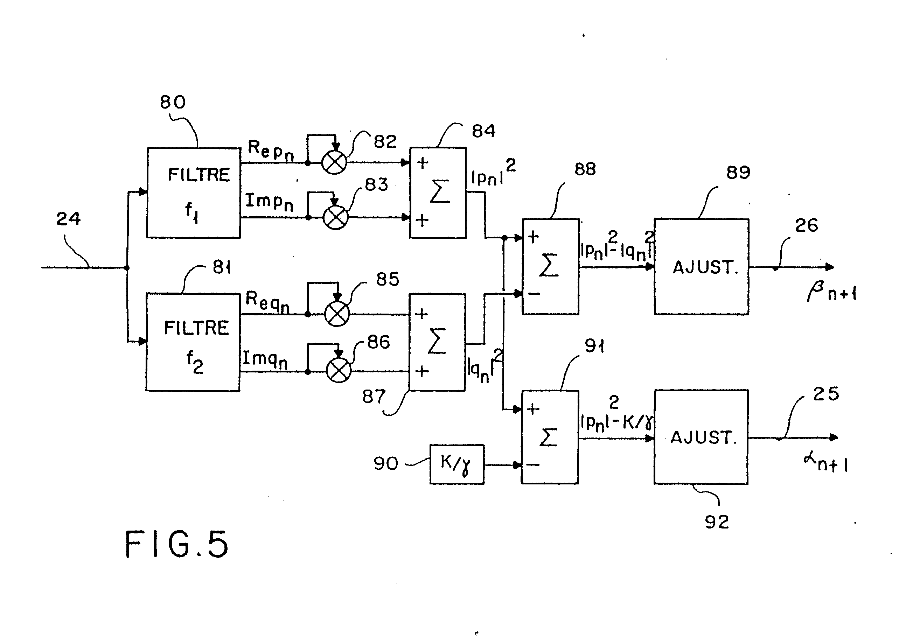

Un dispositif d'ajustement 23 pour ajuster la valeur des coefficients du filtre de compensation 5, a son entrée reliée à la sortie du filtre de compensation 5 par une ligne 24, et deux sorties reliées respectivement par des lignes 25 et 26 à un des pôles, désigné I, de deux commutateurs 27 et 28. Le dispositif d'ajustement 23 sera décrit en détail en référence à la figure 5. Les sorties communes des commutateurs 27 et 28 sont reliées respectivement par des lignes 29 et 30 au filtre de compensation 5.

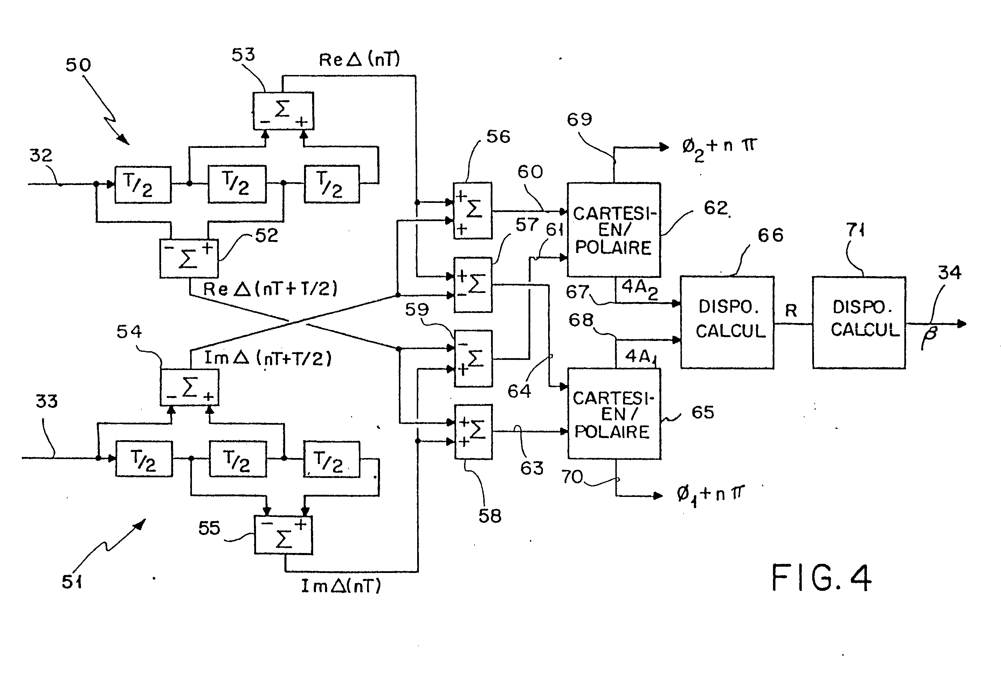

Un dispositif d'initialisation 31 pour initialiser la valeur des coefficients du filtre de compensation 5 a deux entrées reliées respectivement par des lignes 32 et 33 aux lignes 12 et 13, et une sortie reliée par une ligne 34 à l'autre pôle, désigné II, du commutateur 28. Le dispositif d'initialisation 31 sera décrit en détail en référence à la figure 4. L'autre pôle, désigné II, du commutateur 27 est libre.

Le système de traitement 7 peut être constitué par tout système connu et ne sera pas décrit ici avec plus de détails. On trouvera une description plus détaillée du système de traitement illustré sur la figure dans la demande de brevet européen précitée EP-A-0006121.

Le filtre de compensation 5 est un filtre numérique qui satisfait aux trois critères suivants:
. il est échantillonné à une cadence supérieure à la cadence de signalisation I/T;
. c'est un filtre qui ne crée par de déphasage des composantes de frequence du signal appliqué à son entrée; et
. sa fonction de transfert est telle que les composantes aux fréquences de Nyquist $f_1$ et $f_2$ du spectre du signal filtré ont des amplitudes substantiellement égales.

On a illustré sur la figure 3 un mode de réalisation préfere du filtre de compensation 5. C'est un filtre transversal symétrique qui comprend une ligne à retard à trois prises constituée par deux éléments à retard 40 et 41, chacun d'eux introduisant un retard égal à la période d'échantillonnage $\tau$ du signal appliqué à l'entrée du filtre, et un sommateur 42. La sortie du convertisseur analogique-numérique 3 (figure 2) est appliquée par la ligne 4 à l'entrée de l'élément à retard 40 oô se situe la première prise. Les signaux sur cette première prise et sur la trcisième prise située à la sortie de l'élément à retard 41 sont multipliés par un coefficient $\beta$ dans deux multiplicateurs 43 et 44 qui reçoivent la valeur de $\beta$ par la ligne 30. Les sorties des multiplicateurs 43 et 44 et le signal sur la seconde prise située au point commun entre les éléments à retard 40 et 41, sont sommés dans le sommateur 42. La sortie du sommateur 42 est appliquée à une entrée d'un multiplicateur 45 dont l'autre entrée reçoit la valeur d'un coefficient $\alpha$ par la ligne 29 et dont la sortie est appliquée à l'entrée du transformateur de Hilbert 8 par la ligne 6.

L'homme de l'art aura compris que l'opération de multiplication du signal de sortie du sommateur 42 par le coefficient $\alpha$ est un coefficient de gain qui n'affecte pas la fonction de filtrage proprement dite du filtre 5. L'adjonction du gain $\alpha$ constitue un perfectionnement au filtre 5 qui sera décrit plus loin et on décrira tout d'abord ce filtre en faisant abstraction du multiplicateur 45 et du gain $\alpha$.

Le filtre (sans multiplicateur 45) illustré sur la figure 3 a pour réponse impulsionnelle:

$$G(Z) = \beta Z + 1 + \beta Z^{-1} \quad (3)$$

avec $Z = \exp j2\pi f\tau$, et

$$j = \sqrt{-1}$$

La fonction de transfert $G(f)$ correspondant à la réponse impulsionnelle $G(Z)$ s'écrit:

$$G(f) = 1 + 2\beta \cos 2\pi f\tau \quad (4)$$

Pour que les composantes à $f_1$ et $f_2$ du spectre du signal filtré aient une amplitude constante, il faut que

$$A_1 G(f_1) = A_2 G(f_2) \quad (5)$$

oô $A_1$ et $A_2$ représentent respectivement les amplitudes des composantes à $f_1$ et $f_2$ du spectre du signal reçu.

En posant $R = A_2/A_1$, l'expression (5) peut s'écrire:

$$G(f_1) = R \, G(f_2) \quad (6)$$

D'après l'équation (4) on a alors:

$$1 + 2\beta \cos 2\pi f_1\tau = R (1 + 2\beta \cos 2\pi f_2\tau) \quad (7)$$

De la relation (5) on déduit la valeur du coefficient $\beta$:

$$\beta = \frac{R-1}{2 (\cos 2\pi f_1 \tau - R \cos 2\pi f_2 \tau)}$$

Le filtre de compensation 5 illustré sur la figure 3 (sans le multiplicateur 45) avec un coefficient $\beta$ ayant une valeur substantiellement égale à celle donnée par la relation (8) fournit à sa sortie un signal avec un spectre dont les amplitudes des composantes à $f_1$ et $f_2$ sont égales. Selon un mode de réalisation préféré de l'invention, on multiplie la sortie du sommateur 42 par un coefficient $\alpha$ afin que les composantes à $f_1$ et $f_2$ aient d'une part une amplitude égale et d'autre part une amplitude égale à une valeur donnée constante K. Ceci permet de contrôler la valeur de cette amplitude et ainsi de faire fonctionner les éléments en aval du récepteur dans des conditions optimales.

Le filtre de compensation 5 illustré sur la figure 3 a alors pour réponse impulsionnelle:

$$G(Z) = \alpha (\beta Z + 1 + \beta Z^{-1}) \quad (9)$$

et pour fonction de transfert:

$$G(f) = \alpha (1 + 2\beta \cos 2\pi f\tau) \quad (10)$$

La valeur de $\beta$ est toujours celle définie par la relation (8).

La valeur de $\alpha$ est obtenue en faisant

$$\alpha G(f_1) = \alpha R G(f_2) = K \quad (11)$$

D'après la relation (4), on a

$$\alpha (1 + 2\beta \cos 2\pi f_1\tau) = K \quad (12)$$

En substituant $\beta$ par sa valeur tirée de la relation (8), dans la relation (12), on obtient:

$$\alpha \left\{ 1 + (R-1) \frac{\cos 2\pi f_1 \tau}{\cos 2\pi f_1 \tau - R \cos 2\pi f_2 \tau} \right\} = K \quad (13)$$

D'où on tire la valeur de $\alpha$:

$$\alpha = \frac{K}{R} \frac{\cos 2\pi f_1 \tau \ R \ \cos 2\pi f_2 \tau}{\cos 2\pi f_1 \tau - \cos 2\pi f_2 \tau} \qquad (14)$$

Comme on vient de le décrire, pour que le filtre de compensation 5 remplisse la fonction de filtrage désirée, il faut que le coefficient $\beta$ ait une valeur substantiellement égale à celle donnée par la relation (8), or cette deuxieme valeur dépend de R c'est-à-dire du rapport entre les amplitudes des composantes à $f_1$ et $f_2$ du spectre du signal reçu. Selon une première approche, on peut prévoir un moyen d'emmagasinage pour stocker plusieurs valeurs de $\beta$ calculées au préalable et sélectionner la valeur de $\beta$ la plus appropriée selon la mesure de R. Cette première approche représente un compromis simple qui peut donner de bons résultats lorsque les caracteristiques des canaux de transmission sont connues avec une certaine précision et ne varient pas beaucoup dans le temps. Selon une seconde approche, qui est un mode de réalisation preféré de l'invention, on détermine la valeur de $\beta$ à partir du signal de synchronisation qui précède le signal de données, et qui est reçu par le récepteur pendant sa phase d'initialisation. L'avis V29 du CCITT prévoit que la transmission du signal de données peut être précédée par la transmission d'un signal de synchronisation dont le second segment est constitué par des alternances successives entre deux symboles prédéterminés. pour plus de détail sur l'avis V29 du CCITT, on se référera par exemple à l'ouvrage suivant du CCITT: Livre jaune, volume 8, fascicule 8-1, pages 165-177, Genève 1980.

Le signal de synchronisation ci—dessus a un spectre de frequence constitué par trois composantes aux fréquences $f_c$, $f_1$ et $f_2$. Le signal de synchronisation reçu par le récepteur peut s'écrire sous la forme:

$x(t) = A_1 \exp j(2\pi f_1 t + \emptyset_1) + A_c \exp J(2\pi f_c t + \emptyset_c)$
$+ A_2 \exp j(2\pi f_2 t + \emptyset_2)$ (15)

oô $A_1$, $A_c$ et $A_2$

représentent respectivement l'amplitude des composantes à $f_1$, $f_c$ et $f_2$ du signal de synchronisation reçu,

$\emptyset_1$, $\emptyset_c$ et $\emptyset_2$

représentent respectivement la phase des composantes à $f_1$, $f_c$ et $f_2$ du signal de synchronisation reçu, et

$j = \sqrt{-1}$

Puisque

$$f_1 = f_c - \frac{1}{2T} \qquad \text{et} \qquad f_2 = f_c + \frac{1}{2T} \ ,$$

FIG8/15

le signal x(t) peut se mettre sous la forme:

$$x(t) = A_1 \exp j[2\pi(f_c - \frac{1}{2T})t + \phi_1] + A_c \exp j(2\pi f_c t + \phi_c)$$

$$+ A_2 \exp j[2\pi(f_c + \frac{1}{2T})t + \phi_2]$$

$$(16)$$

Après démodulation complexe par une porteuse à la fréquence $f_c$, le signal de synchronisation reçu et démodulé peut s'écrire:

6

$$y(t) = A_1 \exp j(\phi_1 - \frac{\pi t}{T}) + A_c \exp j\phi_c + A_2 \exp j(\phi_2 - \frac{\pi t}{T})$$

$$(17)$$

Le signal $y(t)$ échantillonné à la cadence T, peut se mettre sous la forme:

$y(nT) = A_1 \exp j(\varnothing_1 - n\pi) + A_c \exp j\varnothing_c + A_2 \exp j(\varnothing_2 - n\pi)$ (18)

Il est clair que d'après la relation (17) on a:

$y(nT) - y[(n+1)T] = 2(-1)^n (A_1 \exp j\varnothing_1 + A_2 \exp j\varnothing_2)$ (19)

Si on échantillonne le signal $y(t)$ à la cadence T/2, on a d'après la relation (17):

$y(nT) + T/2) = (-1)^n(-j) A_1 \exp j\varnothing_1 + A_c \exp j\varnothing_c + (1) j A_2 \exp J\varnothing_2$ (20)

D'après la relation (20), on a

$y(nT+T/2) - y[(n+1)T+T/2] = 2j(-1)^n (A_2 \exp j\varnothing_2 - A_1 \exp j\varnothing_1)$ (21)

Posant $\triangle(nT) = y(nT) - y[(n+1)T]$ (22)

$\triangle(nT+T/2) = y(nT+T/2) - y[(n+1)T+T/2]$ (23)

En combinant les relations (19) et (21) on obtient:

$\triangle_1 = \triangle(nT) + j\triangle(nT+T/2) = 4(-1)^n A_1 \exp j\varnothing_1$ (24)

$\triangle_2 = \triangle(nT) - j\triangle(nT+T/2) = 4(-1)^n A_2 \exp j\varnothing_2$ (25)

Avec les relations (24) et (25), on a séparé les composantes à $f_1$ et $f_2$ du signal de synchronisation reçu et une conversion de coordonnées cartésiennes en coordonnées polaires permet de déterminer la valeur de $A_1$ et $A_2$, et ainsi de déterminer la valeur de R qui permet de calculer la valeur appropriée du coefficient β du filtre de compensation 5.

On a représenté sur la figure 4 un mode de réalisation du dispositif d'initialisation 31, qui permet la détermination de la valeur du coefficient β selon les relations (24), (25) et (8). Les sorties du démodulateur 11 (figure 2) sont appliquées respectivement par les lignes 32 et 33 aux entrées de deux lignes à retard à quatre prises 50 et 51. Chacune d'elles est constituée par trois éléments à retard, chacun d'eux introduisant un retard égal à T/2 secondes. La première prise de la ligne à retard 50, qui est située à l'entrée de la ligne à retard, est reliée à l'entrée (−) d'un soustracteur 52 qui a son entrée (+) reliée à la troisième prise de la ligne à retard 50. La seconde prise de la ligne à retard 50 est reliée à l'entrée (−) d'un soustracteur 53 qui a son entrée (+) reliée à la quatrième prise de cette même ligne à retard. La première prise de la ligne à retard 51, qui est située à l'entrée de cette ligne à retard, est reliée à l'entrée (−) d'un soustracteur 54 qui a son entrée (+) reliée à la troisième prise de cette même ligne à retard. La seconde prise de la ligne à retard 51 est reliée à l'entrée (−) d'un soustracteur 55 ayant son entrée (+) reliée à la quatrième prise de cette même ligne à retard. La sortie du soustracteur 53 est reliée à une entrée d'un additionneur 56 et à l'entrée (+) d'un soustracteur 57. La sortie du soustracteur 54 est reliée à l'autre entrée de l'additionneur 56 et à l'entrée (−) du soustracteur 57. La sortie du soustracteur 52 est reliée à une entrée d'un additionneur 58 et à l'entrée (−) d'un soustracteur 59. La sortie du soustracteur 55 est reliée à l'autre entrée de l'additionneur 58 et à l'entrée (+) du soustracteur 59. Les sorties de l'additionneur 56 et du soustracteur 59 sont respectivement reliées par des lignes 80 et 61 aux entrées d'un dispositif conventionnel de conversion de coordonnées cartésiennes/polaires 62. Les sorties de l'additionneur 58 et du soustracteur 57 sont respectivement reliées par des lignes 63 et 64 aux entrées d'un dispositif de conversion de coordonnées cartésiennes/polaires 65. Une première sortie des dispositifs de conversion 62 et 65 est reliée à un premier dispositif de calcul 66 par des lignes 67 et 68, respectivement. Les dispositifs de conversion 62 et 65 ont une seconde sortie qui est reliée respectivement à des lignes 89 et 70. La sortie du dispositif de calcul 66 est reliée à l'entrée d'un second dispositif de calcul 71 dont la sortie est reliée au pôle II du commutateur 28 par la ligne 34 (figure 2).

Avant de décrire le fonctionnement du dispositif de la figure 4, on fera un bref retour à sa théorie de fonctionnement décrite plus haut. Dans le récepteur illustré sur la figure 2, et à partir du transformateur de Hilbert, le signal reçu et tous les signaux qui en sont dérivés sont des signaux complexes définis par leurs composantes en phase et en quadrature que l'on désignera respectivement par les notations Re et Im. Les signaux $y(nT)$, $y[(n+1)T]$, $y(nT+T/2)$ et $y[(n+1)T+T/2]$ peuvent s'écrire alors sous la forme:

$y(nT) = \text{Re } y(nT) + j \text{ Im } y(nT)$ (26)

$y[(n+1)T] = \text{Re } y[n+1)T] + j \text{ Im } y[n+1)T]$ (27)

$y(nT+T/2) = \text{Re } y(nT+T/2) + j \text{ Im } y(nT+T/2)$ (28)

$y[(n+1)T+T/2] = \text{Re } y[(n+1)T+T/2] + j \text{ Im } y[(n+1)T+T/2]$ (29)

D'après les relations (22) et (23), on obtient:

$\text{Re } \triangle(nT) = \text{Re } y(nT) - \text{Re } y[(n+1)T]$ (30)

$\text{Im } \triangle(nT) = \text{Im } y(nT) - \text{Im } y[(n+1)T]$ (31)

Re $\Delta(nT+T/2)$ = Re $y(nT+T/2)$ - Re $y[(n+1)T+T/2]$ (32)
Im $\Delta(nT+T/2)$ = Im $y(nT+T/2)$ - Im $y[(n+1)T+T/2]$ (33)
D'après les relations (24) et (25), on obtient:
Re $\Delta_1$ = Re $\Delta(nT)$ - Im $\Delta(nT+T/2)$ (34)
Im $\Delta_1$ = Im $\Delta(nT)$ + Re $\Delta(nT+T/2)$ (35)
Re $\Delta_2$ = Re $\Delta(nT)$ + Im $\Delta(nT+T/2)$ (36)
Im $\Delta_2$ = Im $\Delta(nT)$ - Re $\Delta(nT+T/2)$ (37)

En se référant aux figures 2 et 4, pendant la phase d'initialisation du récepteur, les commutateurs 27 et 28 sont en position II et les dispositifs d'échantillonnage 9 et 10 échantillonnent les sorties du transformateur de Hilbert 8 à la cadence de 2/T sous la commande de l'horloge 20. Le démodulateur 11 fournit simultanément sur les lignes 32 et 33 les échantillons des composantes en phase et en quadrature du signal de synchronisation reçu démodulé à la cadence de 2/T. Si on désigne par Re $y(nT)$ l'échantillon disponible à un instant d'échantillonnage donné à la quatrième prise de la ligne à retard 50, on aura à ses troisieme, seconde et première prises, les échantillons Re $y(nT+T/2)$, Re $y[(n+1)T]$ et Re $y[(n+1)T+T/2]$, respectivement. A ce même instant d'échantillonnage on aura alors aux quatrième, troisième, seconde et première prises de la ligne à retard 51, les échantillons Im $y(nT)$, Im $y(nT+T/2)$, Im $y[(n+1)T]$ et Im $y[(n+1)T+T/2]$, respectivement. On obtient alors respectivement aux sorties des soustracteurs 53, 55, 52 et 54 les quantités Re $\Delta(nT)$, Im $\Delta(nT)$, Re $\Delta(nT+T/2)$ et Im $\Delta(nT+T/2)$ conformément aux relations (30) à (33).

Ces quatre dernières quantités sont combinées par les dispositifs 56 à 59 et on obtient respectivement sur les lignes 64, 63, 60 et 61 les quantités Re $\Delta_1$, Im $\Delta_1$, Re $\Delta_2$ et Im $\Delta_2$ conformément aux relations (34) à (36). Les quantités Re $\Delta_1$ et Im $\Delta_1$ sont appliquées au dispositif de conversion de coordonnées 65 qui en dérive les quantités $4A_1$ et $(\varnothing_1+n\pi)$ qui sont respectivement représentatives de l'amplitude et de la phase de la composante à $f_1$ du signal de synchronisation reçu. Les quantités Re $\Delta_2$ et Im $\Delta_2$ sont appliquées au dispositif de conversion de coordonnées 62 qui en dérive les quantités $4A_2$ et $(\varnothing_2+n\pi)$ qui sont respectivement représentatives de l'amplitude et de la phase de la composante à $f_2$ du signal de synchronisation reçu. Les quantités $(\varnothing_1+n\pi)$ et $(\varnothing_2+n\pi)$ sont disponibles respectivement sur les lignes 70 et 69 pour utilisation par le récepteur, par exemple pour la synchronisation de l'horloge. Les quantités $4A_1$ et $4A_2$ sont appliquées respectivement par les lignes 68 et 67 au dispositif de calcul 66 qui en dérive la valeur du rapport d'amplitudes R. La valeur du R est appliquée au dispositif de calcul 71 qui en dérive la valeur du coefficient $\beta$ conformément à la relation (8). La valeur du coefficient $\beta$ est appliquée au filtre de compensation 5 par la ligne 34, le commutateur 28 et la ligne 30.

On décrira maintenant le dispositif d'ajustement 23 qui permet d'ajuster continuellement les coefficients du filtre de compensation 5 pendant la transmission d'un signal de données. L'utilisation d'un tel dispositif peut s'avérer désirable lorsque la caractéristique amplitude/fréquence du canal de transmission varie dans le temps. La fonction de transfert du filtre de compensation 5 est donnée dans sa forme la plus générale par la relation (10) rappelée cidessous.

$G(f) = \alpha(1+2\beta \cos 2\pi f\tau)$ (10)

(On notera que la relation (4) est dérivée directement de la relation (8) en faisant $\alpha=1$). Pour que les composantes à $f_1$ et $f_2$ du signal de sortie du filtre de compensation aient une amplitude égale à une valeur donnée K, on doit avoir:

$|H(f_1)|^2 |G(f_1)| = |H(f_2)| |G(f_2)|^2 = K$ (38)

où H(f) est le spectre du signal appliqué à l'entrée du filtre.

Pour cela, il faut ajuster la valeur du coefficient $\beta$ de façon à minimiser la quantite:

$Q = \{|H(f_1)|^2 |G(f_1)| - |H(f_2)| |G(f_2)|\}^2$ (39)

La valeur du coefficient $\beta$ peut alors être ajustée selon la méthode du gradient définie par la relation suivante:

$$\beta_{n+1} = \beta_n - \lambda_1 \frac{\partial Q}{\partial \beta} \quad , \quad \lambda_1 > 0 \qquad\qquad (40)$$

La relation (38) peut être approchée par la relation suivante:

$\beta_{n+1} = \beta_n - \lambda_1 \{ |H(f_1)| |G(f_1)| - |H(f_2)| |G(f_2)| \}$ (41)

Selon l'invention on approche la différence entre crochets par la différence $|p_n| - |q_n|$ et on écrit la relation (41) sous la forme:

$\beta_{n+1} \beta_n - \lambda_2 [ |p_n| |q_n| ]$ (42)

où $p_n$ et $q_n$ représentent respectivement les sorties de deux filtres à bande étroites centrées sur les fréquences $f_1$ et $f_2$, et $\lambda_2$ est un paramètre de pas d'ajustement.

De façon similaire, on ajuste la valeur du coefficient $\alpha$ de façon à minimiser la quantite

$P = [ |H(f_1)|^2 |G(f_1)|^2 - K ]^2$ (43)

La valeur de $\alpha$ peut être ajustée selon la méthode du gradient définie par la relation suivante:

$\alpha_{n+1} = \alpha_n - \lambda \frac{\delta P}{3\delta\alpha}$

La relation (44) peut être approchée par la relation suivante:

$\alpha_{n+1} \alpha_n \lambda_3 [ |H(f_1)|^2 |G(f_1)|^2 - K ]$ (45)

Avec la même approche que celle prise pour l'ajustement de $\beta$, on ecrit la relation (45) sous la forme:

$\alpha_{n+1} = \alpha_n - \lambda_4 [ |p_n|^2 - K/\gamma ]$.(46)

oô $\lambda_4$ est un paramètre de pas d'ajustement, et

$\gamma$ est le gain des deux filtres a bande étroite précités.

Les paramètres $\lambda_2$ et $\lambda_4$ doivent être choisis de façon à être petits par rapport à $\gamma/K$.

Dans la méthode décrite ci-dessus, le gain $\alpha$ est ajusté à partir de la composante à $f_1$ du signal reçu. L'homme de l'art comprendra que le gain $\alpha$ peut être ajusté de façon similaire à partir de la composante à $f_2$, comme exposé brièvement ci-dessous.

Le gain $\alpha$ peut être ajusté de façon à minimiser la quantité:

$P' = [ |H(f_2)|^2 |G(f_2)|^2 - K ]^2$ (43')

La méthode en gradient appliquée à la quantité P' s'écrit:

$$\alpha_{n+1} = \alpha_n - \lambda_5 \qquad \frac{\delta P'}{\delta \alpha}$$

(44') La relation (44') peut être approché par la relation suivante:

$\alpha_{n+1} = \alpha_n - \lambda s [ |H(f_2)|^2 |G(f_2)|^2 - K ]$ (45')

La relation (45') peut être approchée par la relation suivante:

$\alpha_{n+1} = \alpha n - \lambda_5 [ |q_n|^2 - K/\gamma ]$ (46')

où $\lambda_5$ est`un paramètre de pas d'ajustement positif.

On se référera maintenant à la figure 5 qui illustre un mode de réalisation du dispositif d'ajustement 23 de la figure 2. Le dispositif illustré sur la figure 5 ajuste la valeur des coefficients $\alpha$ et $\beta$ conformément aux relations (46) et (42).

Lorsque le récepteur reçoit un signal de données, les commutateurs 27 et 28 (figure 2) sont en position I, et le dispositif d'ajustement 23 ajuste la valeur des coefficients $\alpha$ et $\beta$.

La sortie du filtre de compensation 5 est appliquée par la ligne 24 à l'entrée de deux filtres à bande étroites 80 et 81 centrées respectivement sur les fréquences $f_1$ et $f_2$. Chacun des filtres 80 et 81 a deux sorties fournissant respectivement les composantes en phase et en quadrature du signal filtré. On trouvera un exemple de réalisation de tels filtres dans le brevet français FR-A-2 309 089. La composante en phase Re $p_n$ du signal de sortie du filtre 80 est multipliée par elle-même dans un multiplicateur 82, et la composante en quadrature Im $p_n$ du signal de sortie du filtre 80 est multipliée par elle-même dans un multiplicateur 83. Les sorties des multiplicateurs 82 et 83 sont additionnées dans un additionneur 84 qui fournit à sa sortie la quantité:

$|p_n|^2 = (Re\ p_n)^2 + (Im\ p_n)^2$

La composante en phase Re $q_n$ du signal de sortie du filtre 81 est multipliée par elle-même dans un multiplicateur 85, et la composante en quadrature du même signal de sortie est multipliée par elle-même dans un multiplicateur 86. Les sorties des multiplicateurs 85 et 86 sont additionnées dans un additionneur 87 qui fournit à sa sortie la quantité:

$|q_n|^2 = (Re\ q_n)^2 + (Im\ q_n)^2$

La quantité $|q_n|^2$ est retranchée de la quantité $|p_n|^2$ dans un soustracteur 88. La différence $(|p_n|^2 - |q_n|^2)$ est appliquée à un dispositif de mise à jour conventionnel 89 qui fournit sur la ligne 25 la valeur $\beta_{n+1}$ dérivée de la différence $(|p_n|^2 |q_n|)$ conformément à la relation (42)- La quantite precalculée $K/\gamma$ et qui peut être stockée dans un moyen d'emmagasinage 90 est soustraite de la quantité $|p_n|^2$ dans un soustracteur 91. La différence $(|p_n|^2 - K/\gamma)$ ainsi obtenue est appliquée à un dispositif de mise à jour 92 similaire au dispositif 89 et qui fournit sur la ligne 25 la valeur $\alpha_{n+1}$ dérivée de cette dernière différence conformément à la relation (46).

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

où

**Revendications**

1. Procédé de réception d'un signal de données en modulation DSB-QC envoyé à travers un canal de transmission, caractérisé en ce qu'il comprend les étapes suivantes:

l'échantillonnage du signal reçu à une cadence $1/\tau$ égale à un multiple de la cadence de signalisation l/T du signal de données,

le filtrage du signal échantillonné de façon à ne pas introduire de déphasage du signal reçu, et à ce que les composantes aux fréquences $f_1$ et $f_2$ du signal filtre aient des composantes substantiellement égales, les fréquences $f_1$ et $f_2$ étant définies par les relations suivantes:

9

$$f_1 = f_c - \frac{1}{2T}$$

$$f_2 = f + \frac{1}{2T}$$

où $f_c$ est la fréquence de la porteuse,
et
le traitement du signal filtré pour en dériver les données détectées; ce traitement du signal fiché incluant une opération d'égalisation.

2. Procédé selon la revendication 1, caractérisé en ce que l'étape de filtrage est réalisée conformément à la fonction de transfert suivante:

$G(f) = \alpha (1 + 2\beta \cos 2\pi f \tau)$

où $\alpha$ est un coefficient representant le gain de l'opération de filtrage, et
$\beta$ est un coefficient dont la valeur est substantiellement égale à

$$\beta = \frac{R-1}{2 \, (\cos 2\pi f_1 \tau - R \cos 2\pi f_2 \tau)}$$

où $R = A_2/A_1$, $A_1$ et $A_2$ représentant respectivement les amplitudes des composantes aux frequences $f_1$ et $f_2$ du signal reçu.

3. Procédé selon la revendication 2, caractérisé en ce que le gain $\alpha$ a une valeur substantiellement égale à:

$$\alpha = \frac{K}{R} \, \frac{\cos 2\pi f_1 \tau - R \cos 2\pi f_2 \tau}{\cos 2\pi f_1 \tau - \cos 2\pi f_2 \tau}$$

où K est une constante représentant l'amplitude désirée des composantes à $f_1$ et $f_2$ du signal filtré.

4. Procédé selon la revendication 2, caractérisé en ce qu'il comprend en outre l'étape suivante:
l'ajustement du coefficient $\beta$ conformément à la relation
$\beta_{n+1} = \beta_n - \lambda_1 [|H(f_1)|^2 |G(f_1)|^2 - |H(f_2)|^2 |G(f)|^2]$
où $\lambda_1$ est un paramètre de pas d'ajustement positif, et
$H(f)$ est le spectre du signal reçu.

5. Procédé selon la revendication 4 caractérisé en ce que l'étape d'ajustement du coefficient $\beta$ comprend les sous-etapes suivantes:
un premier filtrage étroit du signal résultant de ladite étape de filtrage du signal échantillonné pour en extraire la composante à $f_1$, cette composante à l'instant $nT$ étant notée $p_n$,
un second filtrage étroit du signal résultant de ladite étape de filtrage du signal échantillonné pour en extraire la composante à $f_2$, cette composante à l'instant $nT$ étant notée $q_n$, et
l'ajustement du coefficient $\beta$ conformément à la relation:
$\beta_{n+1} - \beta_n - \lambda_2 [ |p_n| |q_n| ]$
où $\lambda_2$ est un paramètre de pas d'ajustement positif.

6. Procédé selon la revendication 2, caractérisé en ce qu'il comprend en outre l'ajustement du gain $\alpha$ conformement à la relation
$\alpha_{n+1} \alpha_n \lambda_3 [ |H(f_1)|^2 |G(f_1|^2 - K]$
où $\lambda_3$ est un paramètre de pas d'ajustement positif,
$H(f)$ est le spectre du signal reçu, et
K est une constante donnée représentant l'amplitude désirée des composantes à $f_1$ et $f_2$ du signal résultant de ladite étape de filtrage du signal échantillonne.

7. Procédé selon la revendication 6, caractérisé en ce que l'étape d'ajustement de gain $\alpha$ comprend les sous-étapes suivantes:
un filtrage étroit du signal résultant de ladite étape de filtrage du signal échantillonné pour en extraire la composante à $f_1$, cette composante à l'instant $nT$ étant notée $p_n$, et
l'ajustement du gain $\alpha$ conformément à la relation:

10

$\alpha n+1 = \alpha n - \lambda 4 [ |pn|2 - K/\gamma ]$
où $\lambda_4$ est un paramêtre de pas d'ajustement positif, et
$\gamma$ est le gain de l'opération de filtrage étroit.

8. Procédé selon la revendication 2, caractérisé en ce qu'il comprend en outre l'ajustement du gain $\alpha$ conformement à la relation:

$\alpha_{n+1} \alpha_n \lambda_5 [ |H(f_2)|^2 |G(f_2)|^2 -K ]$
où $\lambda_5$ est un paramêtre de pas d'ajustement positif,
$H(f)$ est le spectre du signal reçu, et
K est une constante donnée représentant l'amplitude désirée des composantes à $f_1$ et $f_2$ du signal résultant de ladite étape de filtrage.

9. Procédé selon la revendication 2 caractérisé en ce que $\alpha = 1$.

10. Procédé selon la revendication 2 utilisé dans un système dans lequel le signal de données est précédé par un signal de synchronisation dont le spectre comprend des composantes à $f_c$, $f_1$ et $f_2$, caractérisé en ce qu'il comprend en outre les étapes suivantes:

la démodulation du signal filtré par une fréquence porteuse locale égale à $f_c$ à une cadence 2/T,
l'emmagasinage des échantillons du signal démodule,
la détermination des signaux
$\Delta(nT) = y(nT) - y[(n+1)T]$
$\Delta(nT+T/2) = y(nT+T/2) - y[(n+1)T+T/2]$
où $y(nT)$ représente le signal démodulé à l'instant nT,
la détermination des signaux:
$\Delta_1 = \Delta(nT) + j \Delta(nT+T/2)$
$\Delta_2 = \Delta(nT) - j \Delta(nT+T/2)$
la détermination de l'amplitude des signaux $\Delta_1$ et $\Delta_2$,
le calcul du rapport entre des amplitudes ainsi déterminées, ce rapport étant représentatif de R, et
la détermination du coefficient $\beta$ conformément à la relation de la revendication 2.


## Patentansprüche

1. Verfahren für den Empfang eines Datensignals in Modulation DSB-QC, das über einen Übertragungskanal gesendet wird, dadurch gekennzeichnet, dass es folgende Schritte enthält:

Abtastung des empfangenen Signals in einer Kadenz $1/\tau$ teilbar durch die Signalisierungskadenz 1/T des Datensignals.

Filterung des abgetasteten Signals, um keine Phasenverschiebung des empfangenen Signals einzuführen, und um die Komponenten in den Frequenzen $f_1$ und $f_2$ des gefilterten Signals wesentlich gleich zu halten, wobei die Frequenzen $f_1$ und $f_2$ durch folgende Beziehungen definiert sind: $f_1 = f_c - \frac{1}{2T}$ $f_2 = f_c + \frac{1}{2T}$ mit $f_c$ als Frequenz der Trägerwelle, und

Aufbereitung des gefilterten Signals für die Ableitung der detektierten Daten, wobei diese Aufbereitung des festgestellten Signals einen Ausgleichsvorgang enthält.

2. Verfahren gemäss Anspruch 1, dadurch gekennzeichnet, dass die Filterungstufe gemäss folgender Transferfunktion ausgeführt wird:

$G(f) = o\alpha (1 + 2ß \cos\pi 2 f\tau$
in dieser Formel bedeuten:
$\alpha$ Beiwert, der die Verstärkung des Filtervorgangs darstellt, und
ß Beiwert, dessen Wert im Wesentlichen lautet:

$$\beta = \frac{R-1}{2 (\cos 2\pi f_1\tau - R \cos 2\pi f_2\tau )}$$

In dieser Formel ist $R = A_2/A_1$, wobei $A_1$ und $A_2$ die jeweiligen Amplituden der Komponenten in den Frequenzen $f_1$ und $f_2$ des empfangenen Signals darstellen.

3. Verfahren gemäss Anspruch 2, dadurch gekennzeichnet, dass der Verstärkungsfaktor im Wesentlichen folgenden Wert aufweist:

$$= \frac{K}{R} \quad \frac{\cos 2\pi f_1 \tau \; - \; R \cos \pi 2\, f_2 \tau}{\cos 2\pi f_1 \tau \; - \; \cos 2\pi f_2 \tau}$$

wobei K eine Konstante ist, die die gewünschte Amplitude der Komponenten in $f_1$ und $f_2$ des gefilterten Signals darstellt.

4. Verfahren gemäss Anspruch 2, dadurch gekennzeichnet, dass es ausserdem folgenden Schritt enthält: die Abgleichung des Beiwertes ß gemäss der Beziehung

$\text{ß}_{n+1} = \text{ß}_n - \lambda 1 [|H(f_1)|^2 |G(f_1|^2 - | H(f_2)|^2 |G(f_2)|^{2s}]$

In dieser Formel bedeuten:
$\lambda 1$ einen Parameter für einen positiven Abgleichsschritt und
H(f) das Spektrum des empfangenen Signals.

5. Verfahren gemäss Anspruch 4, dadurch gekennzeichnet, dass der Abgleichschritt des Beiwertes ß folgende Under-Schritte enthält:

eine erste enge Filterung des Signals, das sich aus der besagten Filterstufe des abgetasteten Signals ergibt, um die Komponente in $f_1$ zu ermitteln, wobei diese Komponente zum Zeitpunkte nT $p_n$ notiert wird, eine zweite enge Filterung des Signals, das sich aus der besagten Filterstufe des abgetasteten Signals ergibt, um die Komponente in $f_2$ zu ermitteln, wobei diese Komponente zum Zeitpunkt nT $q_n$ notiert wird, und Abgleich des Beiwerts gemäss der Beziehung:

$$\beta_{n+1} = \beta_n \; -\lambda 2 \left[ \; |p_n|\, 2 \; - \; |q_n|\, 2 \right]$$

wobei $\lambda 2$ einen Parameter für einen positiven Abgleichsschritt darstellt.

6. Verfahren gemäss Anspruch 2, dadurch gekennzeichnet, dass es neben dem Abgleich der Verstärkung gemäss der Beziehung

$\alpha_{n+1} = \alpha_n - \lambda 3 \, [ \, |H_{f1}|\, 2 \, |\, G(f_1|\, 2 - K]$

wobei $\lambda 3$ ein Parameter für einen positiven Abgleichsschritt,
h(f) das Spektrum des empfangenen Signals, und
K - eine gegebene Konstante ist, die die gewünschte Amplitude der Komponente des Signals, das sich aus der besagten
Filterstufe des abgetasteten Signals ergibt, in $f_1$ und $f_2$ darstellt.

7. Verfahren gemäss Anspruch 6, dadurch gekennzeichnet, dass die Abgleichstufe der Verstärkung $\alpha$ folgende Unter-Schritte enthält:

eine enge Filterung des Signals, das sich aus der besagten Filterstufe des abgetasteten Signals ergibt, um daraus die Komponente in $f_1$ zu ermitteln, wobei diese Komponente zum Zeitpunkt nT $p_n$ geschrieben wird, und Abgleich des Verstärkungsfaktors gemäss der Beziehung:

$\alpha_{n+1} = \alpha_n - \lambda 4 \, [ \, |P_n|\, 2 - K/i\gamma]$

wobei $\lambda 4$ ein Parameter für einen positiven Abgleichsschritt ist, und
$\gamma$ der Verstärkungsfaktor des engen Filtervorgangs.

8. Verfahren gemäss Anspruch 2, dadurch gekennzeichnet, dass es ausserdem den Abgleich des Verstärkungsfaktors $\alpha$ gemäss folgender Beziehung enthält:

$\alpha_{n+1} = \alpha_n - \lambda 5 \, [ \, |H(f_2)|\, 2 \, |\, G\, (f_2)\, |2 - K]$

wobei $\lambda 5$ ein Parameter für einen positiven Abgleichsschritt ist, und
h(f) das Spektrum des empfangen Signals, und
K eine gegebene Konstante, die die gewünschte Amplitude der Komponenten des Signals, das sich aus der besagten Filterstufe ergibt, in den Frequenzen $f_1$ und $f_2$ darstellt.

9. Verfahren gemäss Anspruch 2, dadurch gekennzeichnet, dass $\alpha = 1$.

10. Verfahren gemäss Anspruch 2, in einem System verwendet, in dem dem Datensignal ein Synchronisiersignal vorangeht, dessen Spektrum die Komponenten in $f_c$, $f_1$ und $f_2$ umfasst, dadurch gekennzeichnet, dass es ausserdem folgende Schritte enthält:

die Demodulation des gefilterten Signals durch eine örtliche Trägerfrequenz gleich $f_c$ in einer Kadenz 2/T,
die Speicherung der Proben des demodulierten Signals,
die Ermittlung der Signale
$\Delta\, (nT) = y(nT) - y(n+1)T$
$\Delta\, (nT+T/2) = y(nT+T/2) - y\, (n+1)T+T/2$
wobei y(nT) das demodulierte Signal zum Zeitpunkt nT darstellt,
die Ermittlung der Signale:
$\Delta_1 = \Delta\, (nT) + j\Delta\, (nT+T/2)$
$\Delta_2 = \Delta\, (nT) - j\Delta\, (nT+T/2)$
die Ermittlung der Amplitude der Signale $\Delta_1$ und $\Delta_2$,
Berechnung des Verhältnisses zwischen den so ermittelten Amplituden, wobei dieses Verhältnis für R

12

repräsentativ ist, und

Ermittlung des Beiwertes ß gemäss der Beziehung von Anspruch 2.

## Claims

1. A method ot receiving a data signal with DSB-QC modulation sent over a transmission channel, characterized in that it comprises the steps of:

sampling the received signal at a rate $1/\tau$ equal to a multiple of the data signaling rate $1/T$,

filtering the sampled signal so that the phase of the received signal will not be altered and that the components at frequencies $f_1$ and $f_2$ of the filtered signal will be substantially equal, said frequencies $f_1$ and $f_2$ being defined as

$$f_1 = f_c - \frac{1}{2T} \qquad f_2 = f_c + \frac{1}{2T}$$

where $f_c$ is the carrier frequency, and

processing said filtered signal to derive the detected data therefrom, said processing including an equalization operation.

2. The method of claim 1, characterized in that the filtering step is performed in accordance with the following transfer function:

$G(f) = \alpha\,(1 + 2\text{ß}\cos 2\pi f\tau)$

where $\alpha$ is a coefficient representing the gain associated with the filtering process, and

ß is a coefficient whose value is substantially equal to

$$\beta = \frac{R-1}{2\,(\cos 2\pi f_1 \tau - R\cos 2\pi f_2 \tau)}$$

where $R = A_2/A_1$, with $A_1$ and $A_2$ being the respective amplitudes of the components at $f_1$ and $f_2$ of the received signal.

3. The method of claim 2, characterized in that the value of said coefficient $\alpha$ is substantially equal to

$$\alpha = \frac{K}{R}\,\frac{\cos 2\pi f_1 \tau - R\cos 2\pi f_2 \tau}{\cos 2\pi f_1 \tau - \cos 2\pi f_2 \tau}$$

where K is a constant representing the desired amplitudes of the components at $f_1$ and $f_2$ of said filtered signal.

4. The method of claim 2, characterized in that it further comprises a step of adjusting said coefficient ß in accordance with the relation

$\text{ß}_{n+1} = \text{ß}_n - \lambda_1\,[|H(f_1)|^2\,|G(f_1)|^2 - |H(f_2)|^2\,|G(f_2)|^2]$

where $\lambda_1$ is a positive adjustment step parameter, and

$H(f)$ is the spectrum of the received signal.

5. The method of claim 4, characterized in that said step of adjusting said coefficient ß includes the sub-steps of:

passing through a first narrow-band filter the signal resulting from said step of filtering said sampled signal to derive therefrom its component at $f_1$, said component at time $nT$ being designated $p_n$,

passing through a second narrow-band filter said signal resulting from said step of filtering said sampled signal to derive therefrom its component at $f_2$, said component at time $nT$ being designated $q_n$, and

adjusting said coefficient ß in accordance with the relation

$\text{ß}_{n+1} = \text{ß}_n - \lambda_2\,[|p_n|^2 - |n|^2]$

where $\lambda_2$ is a positive adjustment step parameter.

6. The method of claim 2, characterized in that it further comprises a step of adjusting said coefficient $\lambda$ in accordance with the relation

$\alpha_{n+1} = \alpha_n - \lambda_3[|H(f_1)|^2\,|G(f_1)|^2 - K]$

where $\lambda_3$ is a positive adjustment step parameter,

$H(f)$ is the spectrum of the received signal, and

K a given constant representing the desired amplitudes of the components at $f_1$ and $f_2$ of the signal resulting from said step of filtering said sampled signal.

7. The method of claim 6, characterized in that said step of adjusting said gain $\lambda$ includes the sub-steps of:

passing through a narrow-band filter the signal resulting from said step of filtering said sampled signal to derive therefrom its component at $f_1$, said component at time $nT$ being designated $p_n$, and adjusting said gain $\lambda$ in accordance with the relation

$$\alpha_{n+1} = \alpha_n - \lambda_4 \, |p_n|^2 - K/\gamma]$$

where $\lambda_4$ is a positive adjustment step parameter, and

$\gamma$ is the gain associated with the process of passing the signal through said narrow-band filter.

8. The method of claim 2, characterized in that it further comprises a step of adjusting said gain $\alpha$ in accordance with the relation

$$\alpha_{n+1} = \alpha_n - \lambda_s \, [ \, |H(f_2)|^2 \, |G(f_2)|^{2s} - K \, ]$$

where $\lambda_5$ is a positive adjustment step parameter,

$H(f)$ is the spectrum of the received signal, and

$K$ is a given constant representing the desired amplitudes of the components at $f_1$ and $f_2$ of the signal resulting from said filtering step.

9. The method of claim 2, characterized in that $\alpha = 1$.

10. The method of claim 2 for use in a system wherein the data signal is preceded by a synchronizing signal whose spectrum includes components at $f_c$, $f_1$ and $f_2$, characterized in that it further comprises the steps of:

demodulating said filtered signal by means of a local carrier frequency equal to $f_c$ at a rate of $2/T$,

storing samples of the demodulated signal,

determining signals

$$\Delta(nT) = y(nT) - y[(n+1)T]$$
$$\Delta(nT+T/2) = y(nT+T/2) - y[(n+1)T+T/2]$$

where $y(nT)$ represents the demodulated signal at time $nT$,

determining signals

$$\Delta 1 = \Delta(nT) + j \, \Delta(nT+T/2)$$
$$\Delta 2 = \Delta(nT) - j \, \Delta(nT+T/2)$$

determining the amplitude of signals $\Delta_2$ and $\Delta_2$,

calculating the ratio of the amplitudes thus determined, said ratio being representative of $R$, and determining the value of said coefficient $\beta$ in accordance with the relation provided in claim 2.

# FIG. 1

# FIG. 3

FIG. 2

0 080 544

FIG. 4

5

FIG.5

0 080 544